# EUROPEAN PATENT APPLICATION

(11) **EP 2 095 719 A1**
(43) Date of publication of application: **02.09.2009**
(21) Application number: 06835058.6
(22) Date of filing: 14.12.2006
(51) Int. Cl.: A23F 3/18, A47J 31/00

(54) **PROCESS FOR PRODUCING TEA DRINK**

(71) Applicant: ITO EN, LTD., Tokyo 151-8550 (JP)
(72) Inventor: TANIGUCHI, Masashige, Shizuoka 421-0516 (JP); OKANOYA, Kazunori, Shizuoka 421-0516 (JP)
(74) Representative: Kröncke, Rolf
(86) International application number: PCT/JP2006/325446
(87) International publication number: WO 2008/072359

(57) **Abstract**

It is an object of the invention provides a method of manufacturing a tea beverage having an excellent aroma. The invention provides a method of manufacturing a tea beverage, which comprises the steps of preparing an extract of tea leaves containing 40 ppm-210 ppm of theanine, bringing the extract of tea leaves thus prepared into an anaerobic condition, heat-treating the extract of tea leaves in the state of anaerobic condition at a temperature of not lower than 100°C under tightly sealed, and filling the extract of tea leaves thus heat-treated into a hermetically sealed container.

## Description

### Technical Field

This invention relates to a method of manufacturing a green tea beverage having excellent aroma.

### Background Art

It is known that due to the thermal decomposition of an amino acid contained in an extract of tea leaves, a green laver-like aroma is generated. The main component of the green laver-like aroma is dimethyl sulfide. Dimethyl sulfide is liable to volatilize since its boiling point is 36°C, and is liable to change into oxidized products upon contact with oxygen.

In order to generate dimethyl sulfide from the amino acid, it is required to heat the extract. However, dimethyl sulfide may be volatilized or changed to the oxidized product which is responsible for the smell of deterioration by the heating, so there is an incompatible problem.

Therefore, in the manufacture of a beverage such as hermetically packaged tea beverage which frequently includes the steps where the beverage receives the influence of heating and oxygen, it is generally practiced to supplement the aroma of tea by adding, for example, flavor, extracts, powdered green tea, or dimethyl sulfide to the beverage. For example, Japanese Patent No. 2923409 describes a manufacturing method of powdered green tea wherein dimethyl sulfide is added to the green tea.

### Disclosure of Invention

It is an object of the present invention provides the tea beverage having an excellent aroma without adding additives, by increasing the aroma components of the tea which tea leaves inherently have and suppressing the volatilization and oxidation of aroma components, by improving the tea beverage manufacturing process.

In order to achieve the above object, the present invention provides a method of manufacturing a green tea beverage, which includes the steps of:
preparing an extract of tea leaves containing 40 ppm-210 ppm of theanine;
bringing the extract of tea leaves thus prepared into an anaerobic condition;
heat-treating the extract of tea leaves at a temperature of not lower than 100°C under tightly sealed and anaerobic conditions; and
filling the extract of tea leaves thus heat-treated into a container to be hermetically sealed (hereinafter referred to as a hermetically sealed container).

The extract of tea leaves is preferably prepared so as to contain 80 ppm-190 ppm of theanine. Further, the heat treatment is preferably performed at a temperature of 120°C-140°C.

Further, the extract of tea leaves containing theanine at the aforementioned concentration preferably is comprised of 30 wt%-100 wt% of an extract of tea leaves which is extracted at a temperature of 0°C-60°C.

Furthermore, in the step of filling the extract of heat-treated tea leaves into a hermetically sealed container, the extract of tea leaves thus heat-treated is preferably cooled to 0°C-35°C and then the extract is filled into the hermetically sealed container.

Namely, the present invention related to the following method of manufacturing a tea beverage:
1. A method of manufacturing a tea beverage, which comprises the steps of:
   preparing an extract of tea leaves containing 40 ppm-210 ppm of theanine;
   bringing the extract of tea leaves thus prepared into an anaerobic condition;
   heat-treating the extract of tea leaves at a temperature of not lower than 100°C under tightly sealed and anaerobic conditions; and
   filling the extract of tea leaves thus heat-treated into a hermetically sealed container.
2. The method of manufacturing a tea beverage according to claim 1, wherein the extract of tea leaves contains 80 ppm-190 ppm of theanine.
3. The method of manufacturing a tea beverage according to claim 1 or 2, wherein the heat treatment is performed at a temperature of 120°C-140°C.
4. The method of manufacturing a tea beverage according to any one of claims 1 to 3, wherein the extract of tea leaves containing theanine at the concentration is comprised of 30 wt%-100 wt% of an extract of tea leaves which is extracted at a temperature of 0°C-60°C.
5. The method of manufacturing a tea beverage according to any one of claims 1 to 4, in the step of filling the extract of heat-treated tea leaves into a hermetically sealed container, the extract of tea leaves thus heat-treated is cooled to 0°C-35°C and then the extract is filled into the hermetically sealed container.

### Best Mode for Carrying Out the Invention

According to the present invention, it is possible to provide a tea beverage which contains a large quantity of dimethyl sulfide which is principal component of green laver-like aroma, and which is excellent in aroma. The dimethyl sulfide is generated by thermal decomposition of the amino acid contained in the extract. Therefore, the present inventers have taken notice of the quantity of amino acid contained in the extract of tea leaves.

The extract of tea leaves is known to be rich in amino acids. Among the amino acids, Y-glutamyl ethyl amide, also called theanine, is most abundantly contained in the extract and this theanine in high in stability. Therefore, in the present invention, the content of theanine is used as an index of the content of amino acids in the extract of tea leaves.

The content of theanine was measured according to the HPLC method using the OPA (orthophthal aldehyde) derivative fluorescence coloring method (K. Ikegaya, H. Takayanagi, T. Anan; Tea Industry Research Report No. 71 (1990)). In this HPLC method using the OPA derivative fluorescence coloring method, a predetermined quantity of a solution containing amino acid is taken up and the amino acid is reacted with an OPA reagent to generate an OPA derivative. This derivative is then separated by means of reversed phase chromatography and the separated derivative is measured using a fluorescence detector.

### <Preparation of OPA reagent>

143g of OPA is added to 10 mL of 0.1M boric acid buffer solution and completely dissolved, then 0.25 mL of 2-mercaptoethanol is added to the solution to be used.

### <Mobile phase for analysis>

Mobile phase A: To 1L of 12% ethanol solution is added 3.5 mL of a buffer solution, the pH of which has been adjusted in advance to 6.0 with 1M solution of citric acid and 1M solution of tri-potassium citrate.

Mobile phase B: To 1L of 50% ethanol solution is added 3.5 mL of the same buffer solution which is employed in the mobile phase A.

### <Preparation of a sample solution for measurement>

The tea extract to be measured is diluted with distilled water to 5 times, then, it is filtrated through a 0.45 µm membrane filter. The filtrate thus obtained and the OPA reagent are mixed at a ratio of 1:2, and the mixture is agitated several times to obtain a solution, which is immediately injected into HPLC for measurement.

### <Conditions for HPLC>

Column: Wakosil-II 5C18HG, diameter of 4.6 mm × 250 mm; temperature of column: 40°C; mobile phase: A solution and B solution; flow rate: 1.0 mL/min.; gradient: 100%-0% for the A solution and 0%-100% for the B solution; time period of analysis: 60 minutes; detection: fluorescence detection (wavelength of 340 nm for exciting and wavelength of 455 nm for detection).

The manufacturing method of the tea beverage according to the present invention comprises a step of preparing an extract of tea leaves. The extraction of tea leaves may be performed according to a conventionally known method. For example, tea leaves are immersed in ion-exchange water and extracted, the resultant solution is subjected to rough-filtration and microfiltration to obtain an extract.

Preferably, the extract of tea leaves thus prepared contains 40 ppm-210 ppm of theanine before heating. When the extract of tea leaves contains 40 ppm or more of theanine before the heating, it is possible to enable dimethyl sulfide to generate at an appropriate quantity in the tea beverage after heating of the extract, thereby providing a desirable aroma to the person drinking it. However, when the extract of tea leaves contains more than 210 ppm of theanine before heating, dimethyl sulfide may be generated excessively, thereby destroying the balance of aroma and hence the flavor of the tea beverage thus obtained may be undesirable. Therefore, the content of theanine in the extract before the heating is preferably in the range of 40 ppm-210 ppm, more preferably in the range of 50 ppm-200 ppm, most preferably in the range of 80 ppm-190 ppm. When the content of theanine in the extract before the heating is in this preferable range, it is possible to obtain a tea beverage which is especially excellent in green laver-like aroma and in the balance of flavor without giving any disagreeable aftertaste.

The extract of tea leaves containing theanine in the above-described range can be prepared, for example, through being have 30 wt%-100 wt% of an extract of tea leaves which has been extracted at a temperature of 0°C-60°C. Alternatively, such an extract of tea leaves may be prepared by mixing an extract that has been extracted from tea leaves by high-temperature water with an extract that has been extracted from tea leaves by low-temperature water at an appropriate ratio after measuring the content of theanine in each of these extracts so as to enable the resultant mixture to contain a desirable quantity of theanine.

It is generally known that the quantity of amino acid contained in the extract can be increased by extracting tea leaves at lower temperatures. Therefore, it is easy for a person skilled in the art to perform, at first, preparing an extract containing amino acid at a low content that can be obtained by extracting tea leaves by low-temperature water and another extract containing amino acid at a high content that can be obtained by extracting tea leaves by high-temperature water, and then mixing these extracts at a suitable ratio to prepare an extract containing amino acid at a desirable content.

As one example for preparing an extract of tea leaves, it is possible to obtain an extract containing not less than 40 ppm of theanine by mixing an extract that has been obtained by extracting tea leaves at not lower than 90°C with not less than 30 wt% of an extract that has been obtained by extracting tea leaves at not higher than 60°C. Further, it is also possible to obtain an extract containing not less than 80 ppm of theanine by mixing an extract that has been obtained by extracting tea leaves at not lower than 90°C with not less than 50 wt% of an extract that has been obtained by extracting tea leaves at not higher than 60°C. However, it is apparent that the content of theanine can be varied depending on various conditions such as the kinds of tea leaves and the extraction time. Therefore, the mixing ratio between an extract obtained by extraction at high-temperature and an extract obtained by extraction at low-temperature should be suitably adjusted by taking into consideration the content of theanine in each of these extracts.

The method of preparing an extract containing a desired quantity of theanine is not limited to those described above. Namely, as long as the relationship between the conditions such as the kind of tea leaves, extraction temperature, and extraction time, and the content of theanine in an extract is made clear, an extract containing a desired quantity of theanine can be prepared by single kind of extract. Further, an extract containing a desired quantity of theanine can be prepared by using of three or more kinds of extracts.

Next, the extract of tea leaves thus prepared is brought into an anaerobic condition. By bringing the extract of tea leaves into an anaerobic condition, it is possible to suppress the oxidation of dimethyl sulfide that has been generated by the thermal decomposition of an amino acid. In this manner, it is possible to prevent the oxidized products of dimethyl sulfide from being contained in the tea beverage, thereby to prevent the generation of the smell of deterioration.

Herein, by the term "anaerobic conditions", it is intended to mean a state wherein the concentration of dissolved oxygen in an extract is lowered. For the purpose of inhibiting the oxidation of dimethyl sulfide, the concentration of dissolved oxygen is preferably as low as possible. However, the concentration of dissolved oxygen should be appropriately selected in respect of various factors such as the easiness of operation, economic factors, etc.

As for the method of creating the anaerobic conditions, it is possible to employ, without limitation, a membrane filtration method, a vacuum degassing method, a gas replacement degassing method, etc.

Then, the extract of tea leaves in the state of anaerobic condition is subjected to a heat treatment in a sealed state. By heating the extract of tea leaves in a sealed state, it is possible to inhibit the volatilization of dimethyl sulfide and to minimize the exhalation of aroma.

The temperature for heating may be a temperature which is higher than the temperature at which dimethyl sulfide is generated, for example, may be not lower than 100°C. If the heating temperature is not lower than 120°C, it is convenient because the sterilization of tea beverage can be simultaneously performed. On the other hand, when the heating temperature is excessively high, the flavor and aroma of tea beverage may be deteriorated. Therefore, the heating temperature is preferably limited to not higher than 140°C. Therefore, the heating treatment in this process is preferably performed within the range of 100°C-140°C, more preferably the range of 120°C-140°C.

The extract of tea leaves can be heated by using a plate type heat exchanger or a tube type heat exchanger, but not limited thereof.

Then, the extract that has been heated in a sealed state is cooled or heat-dissipated, thereby lowering the temperature of the extract before being filled in a hermetically sealed container and being supplied as a tea beverage product. By performing the filling of the extract into a hermetically sealed container immediately after the heating thereof, the loss of dimethyl sulfide by volatilization can be reduced.

In a more preferable embodiment, the extract is immediately cooled down to 0°C-35°C after heating, and then it is filled into container. Since the boiling point of dimethyl sulfide is 36°C, it is possible, through the cooling of the extract to a temperature of not higher than 35°C, to minimize the volatilization of dimethyl sulfide during the filling operation thereof.

The tea beverage may be filled into hermetically sealed container such as, for example, a PET bottle, a can, a glass bottle, a paper pack and a plastic cup, but not limitation thereof.

### Examples

The tea beverages manufactured according to the present invention ware evaluated for the aroma and flavor. The examples are described below.

The extracts of tea leaves A, B and C were prepared as described below. The extracts A, B and C thus prepared were mixed together and treated under various conditions as specifically shown in the following Examples 1-6 and Comparative Examples 1-6.

### (Extract A)

10g of tea leaves A were extracted with 350g of ion-exchange water at a temperature of 90°C for 3 minutes. The resultant liquid is subject to rough filtration and then to microfiltration to obtain an extract, to which ion-exchange water was added to obtain 1000g of Extract A.

### (Extract B)

15g of tea leaves B were extracted with 500g of ion-exchange water at a temperature of 45°C for 15 minutes. The resultant liquid is subject to rough filtration and then to microfiltration to obtain an extract, to which ion-exchange water was added to obtain 1000g of Extract B.

### (Extract C)

15g of tea leaves C were extracted with 500g of ion-exchange water at a temperature of 25°C for 45 minutes. The resultant liquid is subject to rough filtration and then to microfiltration to obtain an extract, to which ion-exchange water was added to obtain 1000g of Extract C.

### (Example 1)

3750g of Extract A, 1250g of Extract B and 1.5g of L-ascorbic acid (BASF Takeda Vitamin Co., Ltd.) were mixed, and then the pH of the mixture was adjusted to 5.9 with sodium bicarbonate. Thus the formulated liquid containing 48 ppm of theanine was obtained. The formulated liquid was brought into an anaerobic condition by gas replacement method (nitrogen gas replacement). The formulated liquid was heated at 130°C for 90 seconds under a sealed condition with a plate type heat exchanger, and then it was filled into a hermetically sealed container at a temperature of 90°C.

### (Example 2)

2500g of Extract A, 2500g of Extract B and 1.5g of L-ascorbic acid (BASF Takeda Vitamin Co., Ltd.) were mixed, and then the pH of the mixture was adjusted to 5.9 with sodium bicarbonate. Thus the formulated liquid containing 94 ppm of theanine was obtained. The formulated liquid was brought into an anaerobic condition by gas replacement method (nitrogen gas replacement). The formulated liquid was heated at 130°C for 90 seconds under a sealed condition with plate type heat exchanger, and then it was filled into a hermetically sealed container at a temperature of 90°C.

### (Example 3)

1250g of Extract A, 3750g of Extract B and 1.5g of L-ascorbic acid (BASF Takeda Vitamin Co., Ltd.) were mixed, and then the pH of the mixture was adjusted to 5.9 with sodium bicarbonate. Thus the formulated liquid containing 147 ppm of theanine was obtained. The formulated liquid was brought into an anaerobic condition by gas replacement method (nitrogen gas replacement). The formulated liquid was heated at 130°C for 90 seconds under a sealed condition with a plate type heat exchanger, and then it was filled into a hermetically sealed container at a temperature of 90°C.

### (Example 4)

500g of Extract A, 4500g of Extract B and 1.5g of L-ascorbic acid (BASF Takeda Vitamin Co., Ltd.) were mixed, and then the pH of the mixture was adjusted to 5.9 with sodium bicarbonate. Thus the formulated liquid containing 178 ppm of theanine was obtained. The formulated liquid was brought into an anaerobic condition by gas replacement method (nitrogen gas replacement). The formulated liquid was heated at 130°C for 90 seconds under a sealed condition with a plate type heat exchanger, and then it was filled into a hermetically sealed container at a temperature of 90°C.

### (Example 5)

5000g of Extract B was mixed with 1.5g of L-ascorbic acid (BASF Takeda vitamin Co., Ltd.), and then the pH of the mixture was adjusted to 5.9 with sodium bicarbonate. Thus the formulated liquid containing 202 ppm of theanine was obtained. The formulated liquid was brought into an anaerobic condition by gas replacement method (nitrogen gas replacement). The formulated liquid was heated at 130°C for 90 seconds under a sealed condition with a plate type heat exchanger, and then it was filled into a hermetically sealed container at a temperature of 90°C.

### (Example 6)

1250g of Extract A, 3750g of Extract B and 1.5g of L-ascorbic acid (BASF Takeda Vitamin Co., Ltd.) were mixed, and then the pH of the mixture was adjusted to 5.9 with sodium bicarbonate. Thus the formulated liquid containing 147 ppm of theanine was obtained. The formulated liquid was brought into an anaerobic condition by gas replacement method (nitrogen gas replacement). The formulated liquid was heated at 130°C for 90 seconds under a sealed condition with a plate type heat exchanger, and then it was cooled to 30°C immediately and filled into a hermetically sealed container under aseptic conditions.

### (Comparative Example 1)

5000g of Extract A was mixed with 1.5g of L-ascorbic acid (BASF Takeda Vitamin Co., Ltd.), and then the pH of the mixture was then adjusted to 5.9 with sodium bicarbonate. Thus the formulated liquid containing 0 ppm of theanine was obtained. The formulated liquid was brought into an anaerobic condition by gas replacement method (nitrogen gas replacement). The formulated liquid was heated at 130°C for 90 seconds under a sealed condition with a plate type heat exchanger, and then it was filled into a hermetically sealed container at a temperature of 90°C.

### (Comparative Example 2)

4500g of Extract A, 500g of Extract B and 1.5g of L-ascorbic acid (BASF Takeda Vitamin Co., Ltd.) were mixed, ant then the pH of the mixture was adjusted to 5.9 with sodium bicarbonate. Thus the formulated liquid containing 19 ppm of theanine was obtained. The formulated liquid was brought into an anaerobic condition by gas replacement method (nitrogen gas replacement). The formulated liquid was heated at 130°C for 90 seconds under a sealed condition with a plate type heat exchanger, and then it was filled into a hermetically sealed container at a temperature of 90°C.

### (Comparative Example 3)

3750g of Extract A, 1250g of Extract B and 1.5g of L-ascorbic acid (BASF Takeda Vitamin Co., Ltd.) were mixed, and then the pH of the mixture was adjusted to 6.1 with sodium bicarbonate. Thus the formulated liquid containing 48 ppm of theanine was obtained. The formulated liquid was heated at 130°C for 90 seconds under a sealed condition with a plate type heat exchanger, and then it was filled into a hermetically sealed container at a temperature of 90°C.

### (Comparative Example 4)

2500g of Extract A, 2500g of Extract B and 1.5g of L-ascorbic acid (BASF Takeda Vitamin Co., Ltd.) were mixed, and then the pH of the mixture was adjusted to 6.2 with sodium bicarbonate. Thus the formulated liquid containing 94 ppm of theanine was obtained. The formulated liquid was brought into an anaerobic condition by gas replacement method (nitrogen gas replacement). The formulated liquid was heated at 95°C for one minute under an unsealed condition, and then it was filled into a hermetically sealed container at a temperature of 90°C.

### (Comparative Example 5)

500g of Extract A, 4500g of Extract B and 1.5g of L-ascorbic acid (BASF Takeda Vitamin Co., Ltd.) were mixed, and then the pH of the mixture was then adjusted to 6.2 with sodium bicarbonate. Thus the formulated liquid containing 178 ppm of theanine was obtained. The formulated liquid was brought into an anaerobic condition by gas replacement method (nitrogen gas replacement). The formulated liquid was heated at 95°C for one minute under an unsealed condition, and then it was filled into a hermetically sealed container at a temperature of 90°C.

### (Comparative Example 6)

5000g of Extract C and 1.5g of L-ascorbic acid (BASF Takeda Vitamin Co., Ltd.) were mixed, and then the pH of the mixture was adjusted to 5.9 with sodium bicarbonate. Thus the formulated liquid containing 178 ppm of theanine was obtained. The formulated liquid was brought into an anaerobic condition by gas replacement method (nitrogen gas replacement). The formulated liquid was heated at 130°C for 90 seconds under a sealed condition with a plate type heat exchanger, and then it was filled into a hermetically sealed container at a temperature of 90°C.

### (Evaluation)

The formulated liquids of above-described Examples 1-6 and Comparative Examples 1-6 were measured with respect to the content of dimethyl sulfide constituting the aroma component of these formulated liquids according to the following method.

The adjustment of samples: 10 mL of the formulated liquids of Examples 1-6 and Comparative Examples 1-6 were taken in a vial and then 3g of NaCl was added, respectively. Further, 5 µL of 0.1% cyclohexanol was added as an internal standard solution. The extraction of the aroma components was performed by a solid phase microextraction (SPME) method and then the analysis thereof was performed by means of GC/MS.

### Conditions of analysis:

SPME: Divinyl benzene/Carboxen/Polydimethyl siloxane
Extraction: 60°C, 30 minutes
GC/MS: Agilent 5973N
Column: DB-WAX (0.25mmi I.D.×60m×0.25µm)
Flow rate: 1.0 mL/min.
Oven: 35°C (3 minutes)-5°C/min.-240°C (5 minutes)
Injection port: -50°C-12°C/s-240°C; split-less.

The content of theanine was measured according to the HPLC method using OPA derivative fluorescence coloring method as described above.

Further, the organoleptic test with respect to the aroma and taste of the formulated liquids of Examples 1-6 and Comparative Examples 1-6 was performed respectively. The organoleptic test was performed by five skilled examiners wherein the score on evaluation was made as follows: Excellent - four points; Fairly good = three points; Somewhat bad - two points; and Bad = one point. The average of score given by five examiners was calculated, representing by the following symbols: ⊚ = 3.5 points or more; O = 2.5 points or more; Δ = 1.5 to less than 2.5; and × = less than 1.5.

The treatment conditions, the measured results and the results of evaluation of the formulated liquids of Examples 1-6 and Comparative Examples 1-6 were shown in Table 1.

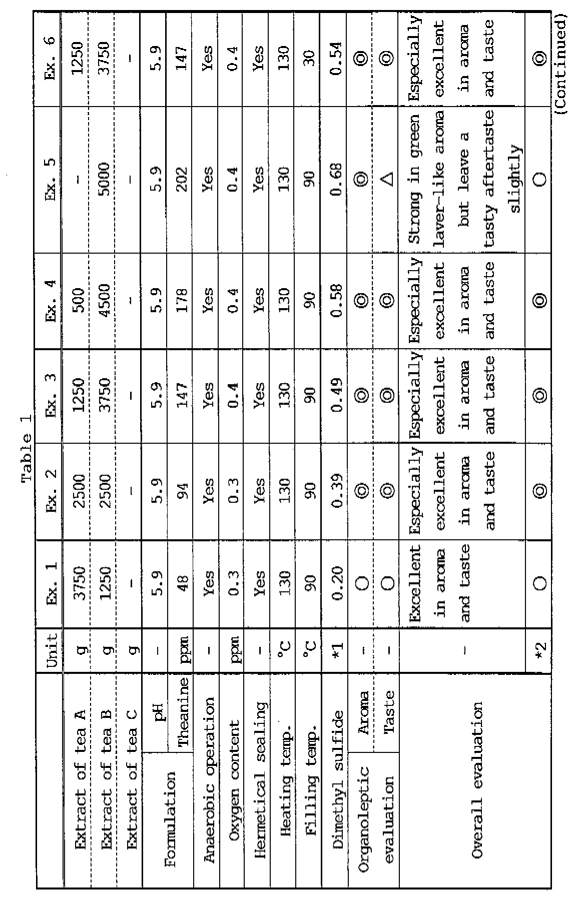

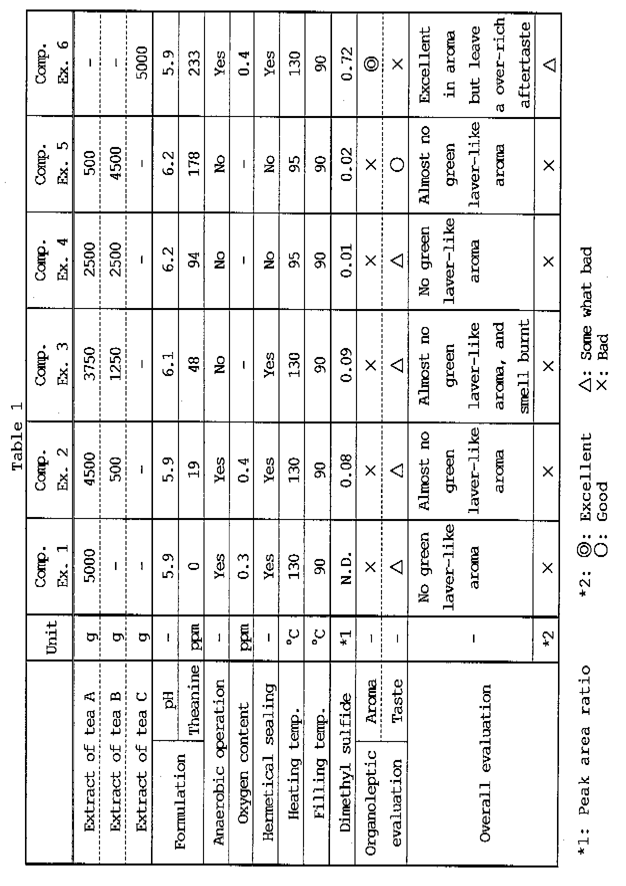

Table 1 indicates that in the cases of Comparative Examples 1 and 2 where the content of theanine was low, it was almost impossible to detect dimethyl sulfide even if the formulated liquids thereof were heated at 100°C or more in a sealed condition after they were brought into an anaerobic condition.

In the case of Example 1, the formulated liquid indicated excellent aroma and taste. However, in the case of Comparative Example 3 where theanine was contained therein in the same quantity as that of Example I but not brought into an anaerobic condition, it was almost impossible to detect dimethyl sulfide and the aroma and taste were found inferior to that of Example 1.

In the cases of Comparative Examples 4 and 5, although the formulated liquids thereof contained a large quantity of theanine, the anaerobic treatment and the heating under sealed condition were not undertaken. Furthermore, the heating was performed at a temperature of 100°C or less. As a result, it was almost impossible to detect dimethyl sulfide from their formulated liquids.

In the cases of Examples 2 to 6, the formulated liquids thereof contained an appropriate quantity of theanine, and the anaerobic treatment and the heating under sealed condition were performed, thereby indicating the generation of a sufficient quantity of dimethyl sulfide. Especially, in the case of Example 6 where the filling temperature was relatively low, it was possible to generate a large quantity of dimethyl sulfide even though the content of theanine in Example 6 was almost the same as that of Comparative Example 3. Therefore, it has been demonstrated that any decrease in the quantity of dimethyl sulfide can be suppressed by the cooling of the formulated liquid after the heating thereof in a sealed condition, followed by filling it in a container.

In the cases of Comparative Example 6, although the content of theanine was the highest and the dimethyl sulfide was generated in large quantity, the organoleptic evaluation thereof was found inferior, thus indicating that an excessive content of theanine negatively influences the taste of tea.

### Industrial Applicability

According to the present invention, since the extract of tea leaves containing an appropriate quantity of amino acid is heated under a sealed condition and anaerobic conditions, it is possible to increase the dimethyl sulfide which is an aroma component and to suppress the volatilization and oxidation of dimethyl sulfide, thereby making it possible to manufacture a tea beverage exhibiting an excellent green laver-like aroma.

## Claims

1. A method of manufacturing a tea beverage, which comprises the steps of:
preparing an extract of tea leaves containing 40 ppm-210 ppm of theanine;
bringing the extract of tea leaves thus prepared into an anaerobic condition;
heat-treating the extract of tea leaves in the state of anaerobic condition at a temperature of not lower than 100°C under tightly sealed; and
filling the extract of tea leaves thus heat-treated into a hermetically sealed container.

2. The method of manufacturing a tea beverage according to claim 1, wherein the extract of tea leaves contains 80 ppm-190 ppm of theanine.

3. The method of manufacturing a tea beverage according to claim 1 or 2, wherein the heat treatment is performed at a temperature of 120°C-140°C.

4. The method of manufacturing a tea beverage according to any one of claims 1 to 3, wherein the extract of tea leaves containing theanine at said concentration is comprised of 30 wt%-100 wt% of an extract of tea leaves which is extracted at a temperature of 0°C-60°C.

5. The method of manufacturing a tea beverage according to any one of claims 1 to 4, in the step of filling the extract of heat-treated tea leaves into a hermetically sealed container, the extract of tea leaves thus heat-treated is cooled to 0°C-35°C and then the extract is filled into the hermetically sealed container.
